# EUROPÄISCHE PATENTANMELDUNG

(11) **EP 0 718 541 A1**
(43) Veröffentlichungstag der Anmeldung: **26.06.1996**
(21) Anmeldenummer: 95810760.9
(22) Anmeldetag: 05.12.1995
(51) Int. Cl.: F16N 7/36, F16N 7/30, F01D 25/18

(54) **Verfahren und vorrichtung zur Eigenschmierung der Wälzlager von Turbomaschinen**

(30) Priorität: 22.12.1994 DE 4445957
(71) Anmelder: ABB Management AG, CH-5401 Baden (CH)
(72) Erfinder: Loos, Markus, CH-5412 Gebenstorf (CH)

(57) **Zusammenfassung**

Aufgabe der Erfindung ist es, ein einfaches und kostengünstiges Verfahren zur Eigenschmierung der Wälzlager von Turbomaschinen, vorzugsweise von innengelagerten Turboladern und eine ebensolche, möglichst kleinbauende Vorrichtung zur Durchführung des Verfahrens zu schaffen.

Erfindungsgemäss wird das dadurch erreicht, dass in der Turbomaschine vorhandene Druckdifferenzen zum Ansaugen des Schmieröls (23) genutzt werden. Ausserdem wird der in den Zentrifugen (4) aufgebaute Druck zur direkten Einspritzung des Schmieröls (23) in die Wälzlager (2, 3) verwendet. Dazu ist das den Unterdruck aufprägende, ringförmige Element (6) stillstehend auf der Welle (1) angeordnet und als Unterdruckkammer ausgebildet. Die Unterdruckkammer (6) ist über die Ölansaugleitung (11) mit dem Ölsumpf (12) und über eine erste Luftleitung (14) mit einem Unterdruckbereich (15) der Turbomaschine verbunden. Der Ölsumpf (12) steht über eine zweite Luftleitung (18) mit einem Überdruckbereich (20) der Turbomaschine in Verbindung. Zwischen der Ölansaugleitung (11) und dem Unterdruckbereich (15) ist eine Trennstelle (22) angeordnet, vorzugsweise in der ersten Luftleitung (14).

## Beschreibung

### Technisches Gebiet

Die Erfindung betrifft ein Verfahren und eine Vorrichtung zur Eigenschmierung der Wälzlager von Turbomaschinen, vorzugsweise von innengelagerten Turboladern.

### Stand der Technik

Für die Ölversorgung der Wälzlager von Turbomaschinen werden häufig Eigenschmierungssysteme, die keine externe Ölpumpe benötigen, verwendet.

Aus der CH-A-451 714 ist eine selbstansaugende Zentrifugal-Schmierölpumpe bekannt. Die an einem Wellenende der Turbomaschine angebrachte Einheit besteht im wesentlichen aus einer Zentrifuge mit einem Staurand und daran anschliessenden Hilfskanälen zur Ableitung überschüssigen Schmieröls sowie einem umlaufenden Pumpenrotor mit radialen Bohrungen. Durch die Fliehkraftwirkung auf die in den Bohrungen rotierende Luftsäule entsteht ein Unterdruck, mit dem Öl über die Ölansaugleitung aus einem Ölsumpf in die Zentrifuge gesaugt wird. Der Staurand und die Hilfskanäle verhindern, dass dieses Öl über die Bohrungen der Scheibe abfliesst. Sie wirken damit als Trennstelle zwischen dem anzusaugenden Schmieröl und der den Unterdruck auf prägenden Luftsäule. Das in der Zentrifuge rotierende Öl erzeugt den für die Einspritzung erforderlichen Öldruck. Es wird von der Zentrifuge aus über axiale Bohrungen direkt in das Wälzlager gespritzt und kann anschliessend wieder in den Ölsumpf abfliessen.

Mit einer solchen Eigenschmierung lässt sich die Verfügbarkeit des Turboladers gegenüber dem Einsatz externer Schmierölpumpen wesentlich verbessern. Ausserdem benötigt die selbstansaugende Pumpe keinen separaten Antrieb und hat daher eine wesentliche Platzersparnis zur Folge.

Dieses System ist konstruktiv einfach auszuführen, wenn die Zentrifuge am Wellenende sitzt und das Öl axial sowie zentrisch angesaugt werden kann. Bei innengelagerten Turbomaschinen, d.h. wenn die Lager zwischen dem Turbinen- und dem Verdichterrad liegen, ist die Realisierung jedoch wesentlich aufwendiger. Durch die EP-B1-01 23 991 ist eine solche Lösung für innengelagerte Turbolader bekannt.

Bei einer derartigen Pumpe kann der sich in der Zentrifuge aufbauenden Druck des Schmieröls jedoch nicht direkt für dessen Einspritzung in die Wälzlager genutzt werden, so wie das bei der Lösung nach der CH-A-451 714 möglich ist. Dies liegt vor allem daran, dass sich das Schmieröl bei innengelagerten Turboladern nicht axial zentrisch zuführen lässt. Zudem kann die Trennsstelle zwischen dem anzusaugenden Schmieröl und der den Unterdruck auf prägenden Luftsäule ebenfalls nicht in Achsnähe der Welle angeordnet werden. Die zu diesem Zweck ausgebildeten Ölsperrlöcher befinden sich zwar möglichst nahe an der Welle, verringern aber den vorhandenen Bauraum zusätzlich. Deshalb ist der Innenradius des in der Zentrifuge rotierenden Schmierölringes grösser als der Radius, an dem sich die Einspritzdüsen befinden. Bedingung für eine wirksame Einspritzung wäre allerdings ein umgekehrtes Verhältnis der beiden Radien.

Um trotz der genannten Probleme die Zufuhr des Schmieröls zu den Wälzlagern zu ermöglichen, wird der in der Zentrifuge auf das Öl übertragene Drall genutzt. Dazu sind weitere Kanäle und Leitungen erforderlich. Sie komplizieren und verteuern jedoch nicht nur die Pumpe, sondern sie benötigen auch zusätzlichen Bauraum.

Mit der EP-B1-01 23 989 ist eine ähnliche Lösung bekannt, bei welcher der Unterdruck durch die Fliehkraftwirkung im Pumpenrotor erzeugt wird. Das Schmieröl wird dabei durch die Wälzlager hindurch in zwei Zentrifugen gesaugt. Die damit erreichbare Druckdifferenz zur Schmierung der Lager ist relativ gering. Bei hohen Drehzahlen kann das dazu führen, dass das Schmieröl den das Lager umgebenden Luftwirbel nicht mehr durchdringt. Auch hierbei kann der von den Zentrifugen aufgebaute Schmieröldruck nicht für eine Einspritzung des Schmieröls in die Lagerstellen genutzt werden. Die Zentrifugen dienen daher hauptsächlich zur Schmutzabscheidung.

Gemeinsamer Nachteil aller genannten Lösungen ist es, dass der zum Ansaugen des Schmieröls benötigte Unterdruck in den Zentrifugen erst erzeugt werden muss. Der dazu auf der Welle des Turboladers angeordnete Pumpenrotor verringert jedoch die Leistung des Turboladers.

### Darstellung der Erfindung

Die Erfindung versucht, all diese Nachteile zu vermeiden. Ihr liegt die Aufgabe zugrunde, ein einfaches und kostengünstiges Verfahren zur Eigenschmierung der Wälzlager von Turbomaschinen, vorzugsweise von innengelagerten Turboladern und eine ebensolche, möglichst kleinbauende Vorrichtung zur Durchführung des Verfahrens zu schaffen.

Erfindungsgemäss wird dies dadurch erreicht, dass bei einem Verfahren gemäss dem Oberbegriff des Anspruchs 1, in der Turbomaschine ohnehin vorhandene Druckdifferenzen zum Ansaugen des Schmieröls in die Zentrifugen genutzt werden. Ausserdem wird der in den Zentrifugen aufgebaute Druck direkt zur Einspritzung des Schmieröls in die Wälzlager verwendet. Dieses Verfahren hat den Vorteil, dass der zum Ansaugen des Schmieröls erforderliche Unterdruck nicht mehr extra erzeugt werden muss. Insbesondere ist damit kein Pumpenrotor erforderlich, so dass im Bereich der Pumpe weniger Bauraum benötigt wird. Die direkte Einspritzung des Schmieröls aus den Zentrifugen in die Wälzlager hat ebenfalls eine Einsparung von Bauteilen und damit von Bauraum zur Folge.

In einer ersten Ausgestaltungsform der Erfindung besteht im Ölsumpf Normaldruck, während das Schmieröl auf an sich bekannte Weise mittels Unterdruck in die Zentrifuge gelangt. Dieser wird von einem ohnehin einen Unterdruck erzeugenden Bereich der Turbomaschine, vorzugsweise vom Verdichtereintritt geliefert. Dazu ist das den Unterdruck aufprägende, ringförmige Element stillstehend um die Welle angeordnet und als Unterdruckkammer ausgebildet. Die Unterdruckkammer ist über eine Ölansaugleitung mit dem Ölsumpf und über eine erste Luftleitung mit einem gegenüber dem Ölsumpf einen Unterdruck aufweisenden Bereich der Turbomaschine verbunden. Das kann neben dem Verdichtereintritt auch der Turbinenaustritt sein. Zwischen dem in der Zentrifuge befindlichen Schmieröl sowie dem Unterdruckbereich ist eine Trennstelle angeordnet, und zwar vorzugsweise in der ersten Luftleitung. Der Ölsumpf steht über eine zweite Luftleitung mit einem Überdruckbereich der Turbomaschine in Verbindung. Als Überdruckbereich wird beispielsweise die Umgebungsluft genutzt.

Bei dieser Pumpe ist der Innenradius der in den Zentrifugen rotierenden Schmierölringe kleiner als der Radius, an dem sich die Einspritzdüsen befinden. Erst dadurch ist es auch bei innengelagerten Turboladern möglich, den sich in der Zentrifuge aufbauenden Druck des Schmieröls direkt für dessen Einspritzung in die Wälzlager zu nutzen.

Die erste Luftleitung mündet in einer Wandanbohrung des Unterdruckbereiches. Besonders zweckmässig ist es, wenn in der Wandanbohrung ein in den Verdichtereintritt bzw. den Turbinenaustritt hineinragender, mit seitlichen Öffnungen versehener Hohlkörper angeordnet und mit der Luftleitung verbunden ist. Dadurch wird der nutzbare Unterdruck in diesem Bereich der Turbomaschine erhöht, was auch bei niedrigen Drehzahlen die zum Ansaugen des Schmieröls erforderliche Druckdifferenz zwischen dem Ölsumpf und den Zentrifugen sichert. Alternativ dazu ist im Unterdruckbereich zumindest eine Düse angeordnet und an ihrem Düsenhals mit der ersten Luftleitung verbunden. Durch die Einschnürung der Strömung in einer solchen Düse wird der zum Ansaugen nutzbare Unterdruck weiter vergrössert.

Ferner ist es vorteilhaft, wenn im Ölsumpf eine Kühlvorrichtung angeordnet ist. Eine solche Kühlung erweist sich insbesondere bei Turboladern als günstig, da sonst die Turbinenerwärmung zu einem starken Anstieg der Schmieröltemperaturen führen würde.

In einer weiteren Ausgestaltungsform der Erfindung herrscht in den Zentrifugen Normaldruck und im Ölsumpf Überdruck, wobei ersterer von der Umgebungsluft und letzterer von einem ohnehin Überdruck erzeugenden Bereich der Turbomaschine zugeführt wird.
Dazu ist der Ölsumpf zumindest weitgehend gasdicht ausgebildet. Die Unterdruckkammer ist über die erste Luftleitung mit der Umgebungsluft verbunden und der Ölsumpf steht über die zweite Luftleitung mit dem Verdichteraustritt in Verbindung.

Mittels eines solchen Verfahrens bzw. der entsprechenden Vorrichtung bestehen auch bei sehr tiefer Last relativ grosse Druckdifferenzen zwischen dem Ölsumpf und der Zentrifuge. Dadurch ist die Ölversorgung der Wälzlager bei allen Betriebsbedingungen gewährleistet.

### Kurze Beschreibung der Zeichnung

In der Zeichnung sind mehrere Ausführungsbeispiele der Erfindung anhand eines innengelagerten Turboladers mit Schmierölpumpe dargestellt.

Es zeigen:
- Fig. 1: eine schematische Darstellung des Turboladers in einer ersten Ausführungsform;
- Fig. 2: einen Teillängsschnitt des Turboladers im Bereich der Schmierölpumpe, entsprechend Fig. 1;
- Fig. 3: einen vergrösserten Ausschnitt des einen Unterdruck aufweisenden Bereichs des Turboladers;
- Fig. 4: eine Darstellung entsprechend Fig. 3, jedoch mit einer im Verdichtereintritt angeordneten Düse;
- Fig. 5: eine schematische Darstellung des Turboladers in einer weiteren Ausführungsform.

Es sind nur die für das Verständnis der Erfindung wesentlichen Elemente gezeigt. Die Strömungsrichtung des Schmieröls ist mit Pfeilen bezeichnet.

### Weg zur Ausführung der Erfindung

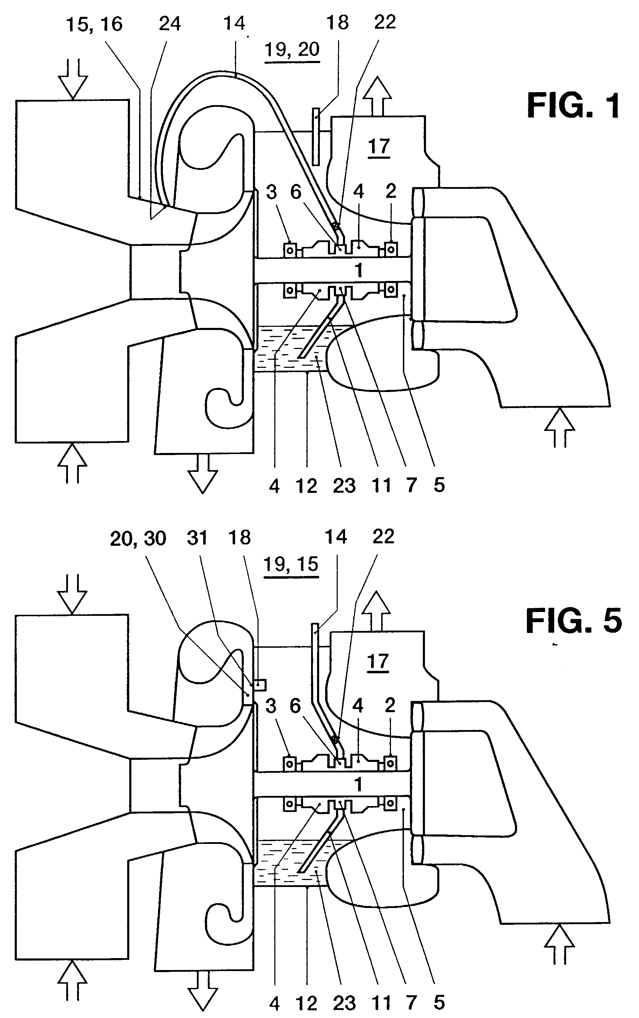

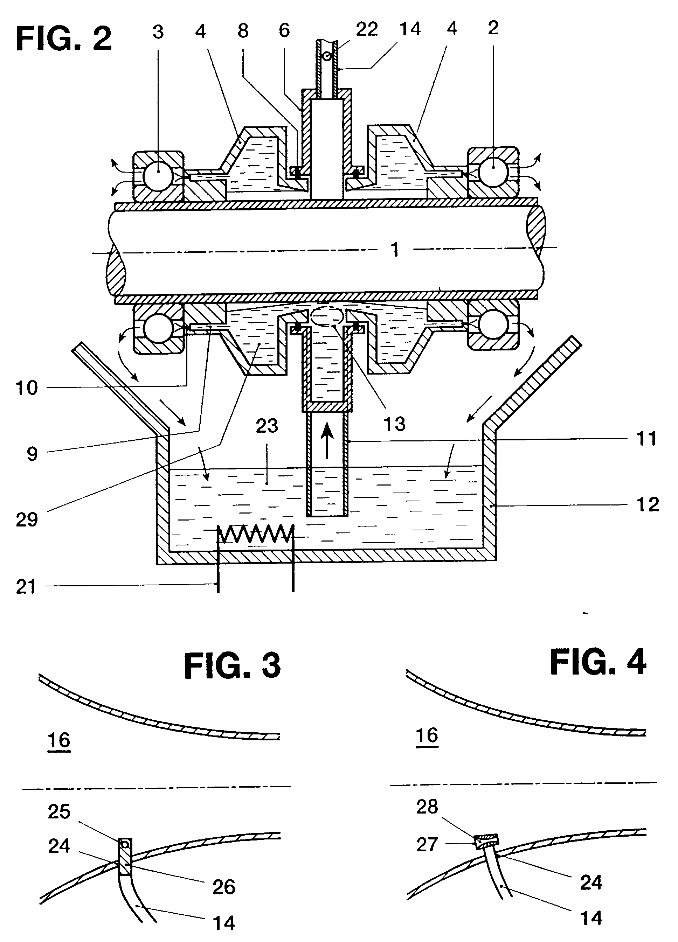

Die Welle 1 des Turboladers ist sowohl auf der Turbinen- als auch auf der Verdichterlagerseite mittels jeweils eines Wälzlagers 2, 3 gelagert. Auf der Welle 1 und zwischen den Wälzlagern 2, 3 sind zwei Zentrifugen 4 in einem Lagergehäuse 5 angeordnet. Dazwischen sitzt ein als Unterdruckkammer ausgebildetes ringförmiges Element 6 (Fig. 1, Fig. 2).

Die Unterdruckkammer 6 ist nicht drehbar, d.h. stillstehend am Lagergehäuse 5 befestigt. Sie ist in ihrem zentralen Bereich 7 zu den Zentrifugen 4 hin offen. Zwischen der Unterdruckkammer 6 und den rotierenden Zentrifugen 4 sind als Kolbenringe ausgebildete Dichtungen 8 angeordnet (Fig. 2), welche der Abdichtung der Zentrifugen 4 gegenüber einem Ölsumpf 12 dienen. Die Zentrifugen 4 sind über axiale Schmierbohrungen 9, die jeweils eine Einspritzdüse 10 aufweisen, mit den Wälzlagern 2, 3 verbunden. Die Unterdruckkammer 6 ist über eine Ölansaugleitung 11 mit dem Ölsumpf 12 verbunden. Dabei ist die Eintrittsöffnung 13 der Ölansaugleitung 11 direkt unterhalb der Welle 1 angeordnet. Die Unterdruckkammer 6 ist über eine erste Luftleitung 14 mit einem Unterdruckbereich 15 des Turboladers, hier dem Verdichtereintritt 16 verbunden (Fig. 1). Sie kann natürlich ebenso mit dem Turbinenaustritt 17 oder einem anderen Unterdruckbereich 15 des Turboladers verbunden sein.

Der Ölsumpf 12 steht durch eine zweite Luftleitung 18 mit der Umgebungsluft 19 in Verbindung, welche gegenüber dem Verdichtereintritt 16 bzw. der Unterdruckkammer 6 einen Überdruckbereich 20 bildet. Zusätzlich ist im Ölsumpf 12 eine Kühlvorrichtung 21 angeordnet und als Wasserkühlung ausgebildet.

Ein als Trennstelle 22 zwischen dem den Zentrifugen 4 zugeführten Schmieröl 23 und dem Verdichtereintritt 16 ausgebildetes Schwimmerventil ist in der ersten Luftleitung 14 angeordnet. Selbstverständlich können mit der gleichen Funktion auch andere Mittel, beispielsweise ein hydraulischer Siphon verwendet werden.

Die erste Luftleitung 14 mündet in einer Wandanbohrung 24 des Verdichtereintrittes 16 (Fig.l). Statt in einer einfachen Wandanbohrung 24 ist in einer anderen Ausführungsform der Erfindung ein in den Verdichtereintritt 16 hineinragender, mit seitlichen Öffnungen 25 versehener, als zylindrisches Röhrchen ausgebildeter Hohlkörper 26 angeordnet und mit der Luftleitung 14 verbunden (Fig. 3).

In einer weiteren Ausführungsform ist im Verdichtereintritt 16 statt des Röhrchens 26 eine Düse 27 angeordnet und an ihrem Düsenhals 28, d.h. an der Stelle ihres geringsten statischen Druckes, mit der Luftleitung 14 verbunden (Fig. 4).

Beim Betrieb der Vorrichtung wird der Unterdruckkammer 6 vom Verdichtereintritt 16 über die erste Luftleitung 14 ein Unterdruck gegenüber dem im Ölsumpf 12 herrschenden Normaldruck der Umgebungsluft 19 aufgeprägt. Diese Druckdifferenz wird genutzt, um das Schmieröl 23 in die Zentrifugen 4 zu fördern. Der Ölpegel in der Unterdruckkammer 6 stellt sich entsprechend der Druckdifferenz ein, wobei ca. 10 mbar zum Ansaugen ausreichen. Das Schwimmerventil 22 verhindert dabei ein Eindringen des Schmieröls 23 in die Luftleitung 14 bzw. den Verdichtereintritt 16.

Weil die Eintrittsöffnung 13 der Ölansaugleitung 11 direkt unterhalb der Welle 1 angeordnet ist, kann das Schmieröl 23 im Stillstand des Turboladers nicht restlos aus der Unterdruckkammer 6 in den Ölsumpf 12 zurücklaufen. Auf diese Weise ist die Schmierung der Wälzlager 2, 3 vorteilhaft bereits unmittelbar nach dem erneuten Starten des Turboladers gewährleistet.

Durch die Anordnung und die besondere Ausbildung des in den Verdichtereintritt 16 hineinragenden Röhrchens 26 wird der nutzbare Unterdruck, d.h. letztlich auch die Druckdifferenz erhöht. Damit ist auch bei niedrigen Drehzahlen die zum Ansaugen des Schmieröls 23 erforderliche Druckdifferenz zwischen dem Ölsumpf 12 und der Unterdruckkammer 6 gewährleistet.

Das Schmieröl 22 gelangt über die Unterdruckkammer 6 in die mit ihr verbundenen Zentrifugen 4. Aufgrund der Fliehkraftwirkung bildet sich dort jeweils ein rotierender Schmierölring 29 aus. Der Innenradius der in den Zentrifugen 4 rotierenden Schmierölringe 29 ist kleiner als der Radius, an dem sich die Einspritzdüsen 10 befinden. Damit ist es auch bei innengelagerten Turboladern möglich, den sich in den Zentrifugen 4 aufbauenden Druck des Schmieröls 23 direkt für dessen Einspritzung in die Wälzlager 2, 3 zu nutzen. Dieser Druck ist zwei bis drei Grössenordnungen höher als der zum Ansaugen des Schmieröls 23 erforderliche.

Abschliessend gelangt das Schmieröl 23 wieder in den Ölsumpf 12 zurück. Dabei erweist sich die Wasserkühlung 21 als günstig, da sonst die Turbinenerwärmung zu einem starken Anstieg der Temperaturen des Schmieröls 23 führen würde.

In einem nächsten Ausführungsbeispiel steht die mit dem Ölsumpf 12 verbundene Unterdruckkammer 6 über die erste Luftleitung 14 mit der Umgebungsluft 19 in Verbindung. In dieser Luftleitung 14 ist das Schwimmerventil 22 angeordnet. Der Ölsumpf 12 ist gasdicht ausgebildet und über die zweite Luftleitung 18 mit dem in Bezug auf die Unterdruckkammer 6 einen Überdruckbereich 20 bildenden Verdichteraustritt 30 verbunden (Fig. 5). Dabei mündet die Luftleitung 18 in einer Wandanbohrung 31 des Verdichteraustrittes 30.

Beim Betrieb dieser Vorrichtung wird dem Ölsumpf 12 vom Verdichteraustritt 30 über die zweite Luftleitung 18 ein Überdruck appliziert. Aufgrund der Beaufschlagung der Unterdruckkammer 6 mit Normaldruck der Umgebungsluft 19 entsteht wiederum eine Druckdifferenz, die zur Zufuhr des Schmieröls 23 in die Zentrifugen 4 genutzt wird. Alle weiteren Abläufe erfolgen im wesentlichen analog dem ersten Ausführungsbeispiel.

### Bezugszeichenliste

- 1: Welle
- 2: Wälzlager, Turbinenseite
- 3: Wälzlager, Verdichterseite
- 4: Zentrifuge
- 5: Lagergehäuse
- 6: ringförmiges Element, Unterdruckkammer
- 7: zentraler Bereich
- 8: Dichtung, Kolbenring
- 9: Schmierbohrung, axiale
- 10: Einspritzdüse
- 11: Ölansaugleitung
- 12: Ölsumpf
- 13: Eintrittsöffnung
- 14: Luftleitung, erste
- 15: Unterdruckbereich
- 16: Verdichtereintritt
- 17: Turbinenaustritt
- 18: Luftleitung, zweite
- 19: Umgebungsluft
- 20: Überdruckbereich
- 21: Kühlvorrichtung, Wasserkühlung
- 22: Trennstelle, Schwimmerventil
- 23: Schmieröl
- 24: Wandanbohrung
- 25: Öffnung
- 26: Hohlkörper, Röhrchen
- 27: Düse
- 28: Düsenhals
- 29: Schmierölring
- 30: Verdichteraustritt
- 31: Wandanbohrung

## Patentansprüche

1. Verfahren zur Eigenschmierung der Wälzlager von Turbomaschinen, welche eine Turbinen- und einer Verdichterlagerseite aufweisen, vorzugsweise von innengelagerten Turboladern, bei dem
a) auf jeder Lagerseite mittels einer hydraulischer Zentrifuge (4) ein Druck im Schmieröl (23) aufgebaut und dieses in die Wälzlager (2, 3) eingespritzt wird,
b) das Ansaugen des Schmieröls (23) aufgrund einer Druckdifferenz zwischen den Zentrifugen (4) sowie einem Ölsumpf (12) erfolgt, wobei den Zentrifugen (4) ein tieferer Druck als dem Ölsumpf (12) aufgeprägt wird, und
c) das Abfliessen des Schmieröls (23) zum Bereich des tieferen Druckes verhindert wird,
dadurch gekennzeichnet, dass
d) in der Turbomaschine vorhandene Druckdifferenzen zum Ansaugen des Schmieröls (23) in die Zentrifugen (4) genutzt werden und
e) der in den Zentrifugen (4) aufgebaute Druck direkt zur Einspritzung des Schmieröls (23) in die Wälzlager (2, 3) genutzt wird.

2. Verfahren nach Anspruch 1, dadurch gekennzeichnet, dass auf an sich bekannte Weise im Ölsumpf (12) Normaldruck und in den Zentrifugen (4) Unterdruck herrscht, letzterer jedoch von einem ohnehin vorhandenen Unterdruckbereich (15) der Turbomaschine, vorzugsweise vom Verdichtereintritt (16), aufgeprägt wird.

3. Verfahren nach Anspruch 1, dadurch gekennzeichnet, dass in den Zentrifugen (4) Normaldruck herrscht und dem Ölsumpf (12) ein Überdruck aufgeprägt wird, wobei ersterer von der Umgebungsluft (19) und letzterer von einem ohnehin vorhandenen Überdruckbereich (20) der Turbomaschine, vorzugsweise vom Verdichteraustritt (30), zugeführt wird.

4. Vorrichtung zur Eigenschmierung der Wälzlager von Turbomaschinen, welche eine Turbinen- und einer Verdichterlagerseite aufweisen, vorzugsweise von innengelagerten Turboladern, bestehend aus
a) je Lagerseite einer auf einer Welle (1) der Turbomaschine angeordneten Zentrifuge (4) mit axialen Schmierbohrungen (9),
b) einer Ölansaugleitung (11), die mit ihrem unteren Ende in einen Ölsumpf (12) eintaucht und an ihrem oberen Ende mit den Zentrifugen (4) verbunden ist,
c) einem ringförmig um die Welle (1) angeordneten Element (6), welches in seinem zentralen Bereich (7) mit den Zentrifugen (4) verbundenen ist und diesen einen Unterdruck gegenüber dem Ölsumpf (12) aufprägt,
dadurch gekennzeichnet, dass
d) das den Unterdruck aufprägende Element (6) stillstehend angeordnet und als Unterdruckkammer ausgebildet ist,
e) die Unterdruckkammer (6) über die Ölansaugleitung (11) mit dem Ölsumpf (12) und über eine erste Luftleitung (14) mit einem Unterdruckbereich (15) der Turbomaschine verbunden ist,
f) eine Trennstelle (22) zwischen dem in der Zentrifuge (4) befindlichen Schmieröl (23) und dem Unterdruckbereich (15), vorzugsweise in der ersten Luftleitung (14), angeordnet ist,
g) der Ölsumpf (12) über eine zweite Luftleitung (18) mit einem Überdruckbereich (20) der Turbomaschine in Verbindung steht.

5. Vorrichtung nach Anspruch 4, dadurch gekennzeichnet, dass die Unterdruckkammer (6) über die erste Luftleitung (14) mit dem Verdichtereintritt (16) oder dem Turbinenaustritt (17) verbunden ist und der Ölsumpf (12) über die zweite Luftleitung (18) mit der Umgebungsluft (19) in Verbindung steht.

6. Vorrichtung nach Anspruch 5, dadurch gekennzeichnet, dass die Luftleitung (14) in einer Wandanbohrung (24) des Unterdruckbereiches (15) mündet.

7. Vorrichtung nach Anspruch 6, dadurch gekennzeichnet, dass in der Wandanbohrung (24) zumindest ein in den Unterdruckbereich (15) hineinragender, mit zumindest einer seitlichen Öffnung (25) versehener Hohlkörper (26) angeordnet und mit der Luftleitung (14) verbunden ist.

8. Vorrichtung nach Anspruch 6, dadurch gekennzeichnet, dass im Unterdruckbereich (15) zumindest eine Düse (27) angeordnet und an ihrem Düsenhals (28) mit der Luftleitung (14) verbunden ist.

9. Vorrichtung nach Anspruch 4, dadurch gekennzeichnet, dass
a) der Ölsumpf (12) zumindest weitgehend gasdicht ausgebildet ist,
b) die Unterdruckkammer (6) über die erste Luftleitung (14) mit der Umgebungsluft (19) verbunden ist, und
c) der Ölsumpf (12) über die zweite Luftleitung (18) mit dem Verdichteraustritt (30) in Verbindung steht.

10. Vorrichtung nach Anspruch 9, dadurch gekennzeichnet, dass die Luftleitung (18) über eine Wandanbohrung (31) mit dem Verdichteraustritt (30) verbunden ist.

11. Vorrichtung nach einem oder mehreren der Ansprüche 4 bis 10, dadurch gekennzeichnet, dass im Ölsumpf (12) eine Kühlvorrichtung (21) angeordnet ist.

12. Vorrichtung nach einem oder mehreren der Ansprüche 4 bis 11, dadurch gekennzeichnet, dass die Trennstelle (22) als Schwimmerventil ausgebildet ist.
